# EUROPEAN PATENT APPLICATION

(11) **EP 2 674 902 A1**
(43) Date of publication of application: **18.12.2013**
(21) Application number: 13171227.5
(22) Date of filing: 10.06.2013
(51) Int. Cl.: G06Q 30/02, G06Q 50/00

(54) **User advertisement space**

(30) Priority: 15.06.2012 US 201213525214
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

The disclosure relates to providing advertisements to users of an online service. A method for providing advertisements to users of an online service is provided, including receiving, from a user of the online service, information related to content of the user provided via the online service to other users of the online service; associating at least some of the information with an advertisement space related to the content; providing, by the online service, advertisements based on the information associated with the advertisement space; selecting at least some of the provided advertisements for display in the advertisement space; and displaying the advertisement space to one or more of the other users viewing at least some of the related content. Furthermore, a server for providing advertisements and an online service hosted by the server are defined.

## Description

### TECHNICAL FIELD

The present disclosure relates to a method and a server for providing advertisements to users of an online service. In particular, the present disclosure may relate to targeting of advertisements in a social network.

### BACKGROUND

Online services, systems, and platforms typically enable users to connect with each other via networks that interconnect terminal devices of the users with each other utilizing a server infrastructure hosting the online service. Users of online services, such as social networks, gaming networks, online platforms, communication and networking sites, may. for example. share data files and other content provided by a user or by the online service. For example, users may upload content, like test data, video and audio files, games, and other interactive or non-interactive media, which is made available by the online service to other users that may enjoy and/or use the content. The content of a user may be provided within a personalized environment associated with the user, such as a personalized page or a profile of the user within a social network. This content may typically be viewed by other users free of charge and the availability may only depend on network and/or privacy settings of the user and the online service.

Generally, providers of online services place advertisements inside of the personalized environments of users, which are used to present the content to other users, in order to finance the online service. However, the advertisements are generally separated in space and context with regard to the content and may therefore be inappropriate for the presented content and may even be disturbing for a user viewing the content. Also, the user who originally uploaded the content has no control over the advertisements that are presented alongside the content, when the content is presented to other viewers. Rather, advertisements are typically selected randomly or according to some fixed rules and often have no relation to the uploaded content. As a consequence, such advertisements often do not match the interests of viewers and are therefore ignored by the viewers or can even distract or irritate other users. Hence, such advertisements may not reach the audience they are intended for and are therefore inefficient.

In view of the above, one object of the present disclosure is to improve the selection and presentation of advertisements related to content provided by an online service, system or platform. In particular, one object of the present disclosure is to increase an overlap of a target group of advertisements with a target audience of the presented content.

### SUMMARY AND INITIAL DISCLOSURE

The problem is solved by a method and a server for providing advertisements to users of an online service as defined in the independent claims. Furthermore, a computer-readable medium, an online service, and an advertisement space are defined. Preferred embodiments of the disclosure are defined in the corresponding dependent claims.

In at least one embodiment, a method for providing advertisements to users of an online service according to the present disclosure comprises receiving, from a user of the online service, information related to content of the user provided via the online service to other users of the online service, and associating at least some of the information with an advertisement space related to the content. Furthermore, the method includes providing, by the online service, advertisements based on the information associated with the advertisement space, selecting at least some of the provided advertisements for display in the advertisement space, and displaying the selected advertisements in the advertisement space to one or more of the other users viewing at least some of the related content.

The user of the online service, such as a social network, may define and/or create an advertisement space as a part of his user profile. Thus, as soon as a viewer, which may be another user of the online service, requests the content provided by the user, the advertisement space will be used by the online service to present suitable advertisements in combination with the content. In order to define the advertisement space, the user may select premade templates provided by the provider of the online service, or may create his or her own templates. A template for an advertisement space may, for example, specify where an advertisement may be placed, how big it may be in screen size, and what kind of content may be allowed, such as images only, video without sound, and others. For each content provided by the user, at least one advertisement space can be defined. The settings for each advertisement space can be different. However, at least some of the settings for at least some of the advertisement spaces of the user may as well be identical. For example, all advertisement spaces of one user may share the same parameters, if the user uploads several content items of the same kind.

The method, which preferably is a computer-implemented method, enables users of the online service to directly influence and control the advertisements displayed in connection with their content, for example by specifying the information related to the content. The advertisements are presented within the advertisement space, which may further be controlled by the respective user. For example, the user may influence a schedule, placement, and kind of advertisements that are presented in his advertisement space. The user may create a link between his content and suitable advertisements by defining information, which is at least partially used, preferably by the online service, to pre-select suitable advertisements for display in the advertisement space. In addition, this information may also be used to further improve targeting of advertisements, which may be placed in other areas within their personalized environments. Hence, the user may define an advertisement space on a designated page, such as a profile of the user, and have other users see advertisements in the advertisement space.

Embodiments of the method disclosed herein allow for a flexible targeting of advertisements which are closely linked to the presented content by the user. In addition, the user may directly influence and control various factors of the advertisements by use of a dedicated advertisement space which may be linked to particular content and which may be controlled by the user. Since the content provided on the online service is well known by the respective user, the user may connect the viewed content with suitable advertisements, such that the target audience of the advertisement overlaps as much as possible with the target audience of the content. Thus, embodiments of the method disclosed herein increase the performance of online advertisements by allowing the user to directly and intuitively control the advertisements for display in a respective advertisement space, therefore enabling the user to improve the targeting towards a suitable target audience.

In a preferred embodiment, said providing advertisements includes matching the information with data of advertisements available on the online service and providing a number of the available advertisements having a largest matching score. As soon as an advertisement space is defined by the user, the user may influence the advertisement targeting by associating at least some of the information, such as a keyword, a tag, or a tag word, to specify what advertisements would fit best with the content related to the advertisement space. Based on the information, the online service may provide and/or offer at least one suitable advertisement matching the information. The online service may define a set of default advertisements ready to be offered, even if the information and/or other matching parameters do not match well, the data related to available advertisements. Thus, there may always be at least one advertisement with a highest matching score out of the group of available advertisements. Based on the matched advertisements, the user owning the advertisement space or the online service may select a suitable set of advertisements for display. The selection may also be done according to further parameters of the advertisements, such as revenue offered to the user or a time schedule.

According to a particularly preferred embodiment, the method further comprises the step of associating a weighting factor to at least some of the information, wherein said advertisements are provided based on the information weighted by a respective weighting factor. For example, each tag, keyword, or other information can be weighted with a value to define its relevance compared to the other tags, keywords, or other information. The weighting value can be set by the user by either entering a number, moving a slider, or using another interface provided by the online service for specifying numerical values.

According to another embodiment, the advertisements for display in the advertisement space are automatically selected by the online service. Furthermore, the selection may also be performed by an advertisement agency or another automated procedure connected to the online service.

In yet another embodiment, the advertisements for display in the advertisement space are selected by the user. Thus, the user may also directly select a suitable advertisement and may even specify a desired advertisement to be placed inside of the advertisement space.

According to a particularly preferred embodiment, the method further includes presenting a preview of the provided advertisements to the user directly after associating the information with the advertisement space.

According to another embodiment, the method further includes receiving user changes of settings of the advertisement space, including changes of at least one of the information and the content associated with the advertisement space. The method further includes receiving user changes of parameters of the advertisement space, preferably including a size and a position of the advertisement space, and a schedule of the selected advertisements.

In yet another preferred embodiment, the content comprises interactive or non-interactive media, applications or services provided by the online service, preferably including audio, video, and multimedia data files, streams thereof, communication applications, messaging applications, games, or services linking to one or more users of the online service. In particular, the content and each content item may be represented by a container. A structure of the container or seed applicable in the method is, for example, disclosed in the U.S. Provisional Application Serial No. 61/533,842, filed September 13, 2011, entitled "Management of Online Content in a Network," the entire content of which is incorporated herein by reference.

In a further embodiment, the content comprises the profile of the user and the advertisement space is displayed whenever another user views the profile of the user. For example, the advertisement space may be displayed in response to presenting the profile of the user to the other user.

According to a preferred embodiment, the method further includes associating at least some of the information with at least one further advertisement space related to the content and displaying the at least one further advertisement space comprising selected advertisements to one or more of the other users viewing the related content. For example, the user may upload a plurality of content items, such as diverse media files, to the online service and may, for each content item, associate a dedicated advertisement space, which is presented in combination with the related content, as soon as the content is being viewed by another user.

In a preferred embodiment, the information of the advertisement space is initially assigned to each one of the at least one further advertisement space. The information associated with a first advertisement space may be automatically used by the online service to pre-set the information for each successive advertisement space and the user may thereafter modify the default values. Preferably, the online service may also first analyze the related content and the information specified by the user with regard to each content item and may thereafter select suitable information as default values for the successive advertisement space.

According to another preferred embodiment, the method further includes the step of choosing, by the online service, at least one of the advertisement spaces for display to one of the other users based on the content requested by the other user. In case only one content item is being requested by another user, the online service may directly determine the related advertisement space. If two or more content items are being requested, the online service may render the related advertisement spaces one after the other or may arrange the advertisement spaces for a simultaneous presentation of advertisements.

In yet another embodiment, the method further includes assigning to the user a reward in response to at least one of the other users interacting with an advertisement displayed in the advertisement space of the user. The user may receive a reward, for example, whenever another user opens a page displaying the advertisement space. The other user may also click on or touch the advertisement or otherwise interact with the advertisement space or the advertisement. As a reward, the user may, for example, receive a certain amount of the advertisement revenues as an incentive to provide suitable information characterizing the uploaded content items in order to improve the placement of advertisements that are connected with the uploaded content. Thus, in order to ensure that the matching is as perfect as possible, the user may be offered a share of the advertisement revenue if the user helps in targeting the advertisements to a suitable audience. Such a share of the advertisement revenue may, for example, be defined as a certain amount of real currency, online currency such as virtual money that is only valid inside a social network, free offers of content on the online service which otherwise would have to be purchased by the user, or other form of compensation. Hence, if configured in this way, the advertisement may follow a revenue split.

In a particularly preferred embodiment, the information includes at least one of one or more keywords, tags, or descriptions of the related content and combinations thereof. The information may be represented as a data structure including one or more elements. The data structure may be any kind of an abstract data type, such as an array, a linked list, a set, a map, a general container, or a tree- or graph-like structure. The one or more elements of the data structure may have the same data type or a different data type, such as any basic or abstract data types. For example, the data structure may be an array of Boolean values, characters, or numbers. Preferably, the data structure may be a container including Boolean values to represent tags, strings to represent keywords, and a set of data pairs representing parameters and respective values. The data structure may also represent a class, wherein the one or more elements represent members of said class. Preferably, in this case, the one or more elements are processed to generate an instance of said class, which is thereafter assigned to the content.

The keywords, tags, descriptions, and also additional data may be freely defined by the user in order to most suitably match the content with advertisements. The tags or keywords may also be pre-defined, such that the user may select from a list or selection of suitable values. Also, the available parameters may be presented to the user, who may appropriately select relevant parameters and input the corresponding values. The assigned values and data may be parsed and analyzed and transformed into the data structure. The data structure may be further processed into a binary representation or may be represented as unstructured or (semi )structured data, such as in an XML document attached to the content.

According to another embodiment, said information further specifies a format and a type of preferred advertisements. The information may comprise parameters to define the presentation characteristics of the preferred advertisement. Based on this information, suitable advertisements may be selected and combined with the content in multiple processing steps, wherein the assigned information related to characteristics of each content item may be used to select suitable advertisements and the parameter values may be used to pre-process the selected advertisements for presentation. Further parameters may specify the modality of the advertisement, such as visual, audio, or audio/video advertisement, as well as interaction capabilities of a suitable advertisement. Such parameters may also exclude certain modalities of the advertisement from display during presentation of the content. For example, a particular tag may determine that a video is only presented without corresponding sound if an uploaded sound file is being played to a viewer. However, the parameters may also be used to directly exclude certain advertisements not matching the requirements defined by the parameters from further processing.

Preferably, the online service is a social network.

According to a preferred embodiment, a plurality of users is connected to the online service and for each user at least one advertisement space is provided.

Furthermore, a method for providing advertisements to users of an online service according to the present disclosure is provided, wherein a plurality of users is connected to the online service and for each user at least one advertisement space is provided by performing the method according to an embodiment of the present disclosure.

In a preferred embodiment, at least some of the advertisement spaces of at least some of the users are combined to a package based on the information associated with each respective advertisement space. Thus, in order to simplify the matching, several advertisement spaces can be combined into one package by the online service if the provided information, such as keywords, match very closely. This may be the case if unique or pre-determined keywords are used. However, the online service may as well compute a distance between the keywords and create respective groups based on the distance. For example, if users provide content connected to a certain product, such as a video game, e.g., "Crysis 2," this product serves as a unique keyword to all uploaded content, which is targeted towards fans of this product, e.g., all fans of the video game "Crysis 2." As a consequence, all advertisement spaces related to "Crysis 2" may be combined in a package. Advertisers targeting this group of users can match their advertisements towards the package since it only includes advertisement spaces that are of interest to "Crysis 2" fans.

Preferably, the same advertisements are provided by the online system for the advertisement spaces of the package. Hence, targeting of advertisements may be greatly simplified by the use of packages if many advertisement spaces of different users are being used.

According to another embodiment, the method further includes renting, to a first user of the plurality of users, an advertisement space of a second user of the plurality of users. Thus, the first user of the network can function as an advertisement agency by renting the advertisement space of other users. By renting additional advertisement spaces, the first user may search for advertisements suitable for display in the rented advertisement spaces. The first user may pay a fixed rate to the second user owning the rented advertisement space and may, in turn, receive the reward related to the rented advertisement space, such as a share of the revenue of the advertisement. Preferably, renting of advertisement spaces may be time based and/or limited in time.

In addition, a computer-readable medium according to the present disclosure has instructions stored thereon, wherein said instructions, when installed and executed on a computing device, cause said computing device to automatically perform a method according to an embodiment of the present disclosure. Said instructions may configure a server hosting the online service to provide an input interface configured to enable a user of the online service to specify information related to content of the user provided via the online service to other users of the online service. Said instructions may further configure the server to provide means for associating at least some of the information with an advertisement space related to the content. Furthermore, a processing component of the online service may be configured by the instructions to provide advertisements based on the information associated with the advertisement space, and said server may be further configured by the instructions to provide means for selecting at least some of the provided advertisements for display in the advertisement space. In addition, the instructions may configure the server to render an output interface configured to display the advertisement space to one or more of the other users viewing at least some of the related content. The medium may be directly read by a reading device of the server. However, the medium may as well be read by a reading device of a computing device coupled to the server via a network, such that the instructions read from the medium are transmitted from the computing device to the server and executed on the server.

Furthermore, a server, according to the present disclosure, for providing advertisements to users of an online service hosted by the server includes an input interface configured to enable a user of the online service to specify information related to content of the user provided via the online service to other users of the online service. The server also includes means for associating at least some of the information with an advertisement space related to the content, a processing component of the online service configured to provide advertisements based on the information associated with the advertisement space, means for selecting at least some of the provided advertisements for display in the advertisement space, and an output interface configured to display the selected advertisements in the advertisement space to one or more of the other users viewing at least some of the related content.

The server enables uploading and presentation of user-generated content in combination with advertisements presented by dedicated advertisement spaces related to the respective content, wherein the user may directly control and influence the selection of suitable advertisements by associating information characterizing the related content with the respective advertisement space. The server may be provided on any computing platform capable of presenting user-uploaded content to viewers or an audience, such as other users of the online service. The computing platform may comprise a single computer or a plurality of interconnected computing devices. Also, in order to store the uploaded content, the assigned information, and advertisements, the server may provide one or more databases, such as at least one database dedicated to the content and assigned information and at least one further database storing a plurality of advertisements.

In yet another embodiment, the processing component comprises a matching module configured to match the information with data of advertisements available on the online service and provide a number of the available advertisements having a largest matching score.

According to a particularly preferred embodiment, the server further comprises means for associating a weighting factor to at least some of the information, wherein said advertisements are provided based on the information weighted by a respective weighting factor.

In a further embodiment, the output interface is further configured to present a preview of the provided advertisements to the user directly after associating the information with the advertisement space.

According to a preferred embodiment, the input interface is further configured to enable the user to change settings of the advertisement space, including changing at least one of the information and the content associated with the advertisement space and further parameters of the advertisement space, preferably including a size and a position of the advertisement space, and a schedule of the selected advertisements.

In a preferred embodiment, the content comprises interactive or non-interactive media, applications, or services provided by the online service, preferably including audio, video, and multimedia data files, streams thereof, communication applications, messaging applications, games, or services linking to one or more users of the online service.

According to another preferred embodiment, the content comprises the profile of the user and the output interface is further configured to display the advertisement space whenever another user views the profile of the user.

In yet another embodiment, said means for associating is further configured to associate at least some of the information and related content with at least one further advertisement space of the user and wherein said output interface is further configured to display the at least one further advertisement space comprising selected advertisements to one or more of the other users viewing the related content.

According to another embodiment, said processing component is further configured to choose at least one of the advertisement spaces for display to one of the other users based on the content requested by the other user.

In a particularly preferred embodiment, the server further includes means for assigning to the user a reward, responsive to at least one of the other users interacting with an advertisement displayed in the advertisement space of the user. For example, said means may be responsive to opening of a page comprising the advertisement space by the other user or to a click, a touch, or another interaction with the advertisement space or the advertisement therein.

According to another embodiment, said online service is configured to provide advertisements to users of the online service, wherein a plurality of users is connected to the online service and for each user at least one advertisement space is provided by the server.

In addition, an online service according to the present disclosure is hosted by a server according to an embodiment of the present disclosure, wherein said online service is configured to provide advertisements to users of the online service, wherein a plurality of users is connected to the online service and for each user at least one advertisement space is provided by the server.

According to a particularly preferred embodiment, the processing component of the server is configured to combine at least some of the advertisement spaces of at least some of the users to a package based on the information associated with each respective advertisement space.

In yet another embodiment, the processing component of the server is further configured to provide the same advertisements for the advertisement spaces of the package.

According to another embodiment, the online service further includes means for renting, by a first user of the plurality of users, an advertisement space of the first user to a second user of the plurality of users.

Furthermore, an advertisement space according to the present disclosure, which is related to content of a user of an online service, is provided, said advertisement space being adapted to provide advertisements to users of the online service, wherein information related to the content of the user is specified by the user and at least some of the information is associated with the advertisement space, wherein based on the information associated with the advertisement space, the online service provides advertisements of which at least some are selected for display in the advertisement space to one or more other users viewing at least some of the related content. It is to be understood that the advertisement space may be combined with any of the features of the aforementioned server or method according to an embodiment of the present disclosure.

### BRIEF DESCRIPTION OF THE DRAWINGS

Further details, aspects and characteristics of the present disclosure are described in example embodiments with reference to the figures of the accompanying drawings, in which:
- FIGURE 1: shows a flow chart of a method for providing advertisements to users of an online service according to an aspect of the present disclosure;
- FIGURE 2: shows a schematic representation of an input interface of a server according to an aspect of the present disclosure;
- FIGURE 3: shows a schematic representation of an output interface of a server according to an aspect of the present disclosure; and
- FIGURE 4: illustrates a presentation of an advertisement space related to a profile of a user of an online service, according to an aspect of the present disclosure.

### DETAILED DESCRIPTION

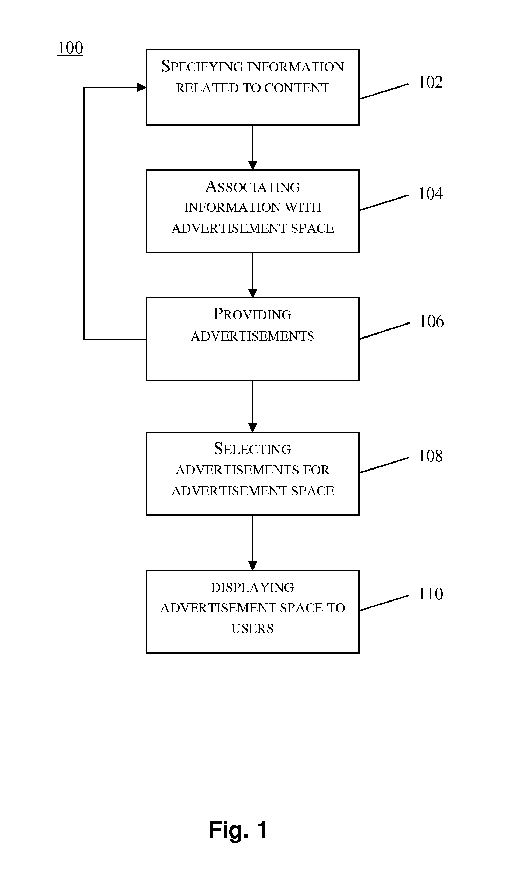

FIGURE 1 shows a flow chart of a method 100 for providing advertisements to users of an online service according to an embodiment of the present disclosure. The method 100 may preferably be executed by a server or system hosting the online service and may provide respective input and output interfaces for users in order to allow for interaction with a user. In step 102 of the method 100, a user of the online service may utilize such an input interface to specify information related to content of the user provided via the online service to other users of the online service. Thereafter, the user may associate at least some of the information with an advertisement space related to the content in step 104. It is to be understood that the online service or an advertisement provider may entirely or at least in part contribute to the association of information with the advertisement space. Also, step 104 may be simplified in that all information related to a particular content item is directly associated with the respective advertisement space.

The method 100 continues with step 106, wherein the online service provides advertisements based on the information associated with the advertisement space. The online service may, for example, match the information related to the advertisement space with data related to advertisements available at the online service. In step 108, the user and/or the online service may select at least some of the provided advertisements for display in the advertisement space. For example, the user may utilize another input interface to select the advertisements.

As an alternative, the user may continue with steps 102 and 104 to specify further information or to modify the existing information if the user holds that the advertisements provided by the online service do not suitably match the target audience of the related content. After definition of fitting advertisements in step 108, the online service displays to the viewers of the advertisement space one or more of the related advertisements and the related content or parts thereof and the method 100 ends.

Any advertisement provider that advertises in the online service, such as a social network, can use the provided advertisement spaces of the users. There may be several ways for an advertiser to provide advertisements in the advertisement spaces of users.

The advertisement provider or advertiser may define data such as keywords for his advertisements and let the system hosting the online service automatically perform the matching with the information provided by the users. In addition, further information like amount and frequency of advertisement placement, purchase costs, and degree of matching may be provided by the advertiser. In particular, information concerning the degree of matching may be necessary for the online service to define how close the information associated with an advertisement space has to match the keywords of the advertisement. For example, the advertiser can demand that a certain keyword has to match exactly, or that, even if no keywords match, the advertisement is still shown in advertisement spaces that have a highest matching score, such as a closest "almost match." With the information provided, the system of the online service can schedule the advertisement until, for example, an advertisement campaign is over.

The online service may also provide the advertisers with a listing of available user advertisement spaces or a listing of packages including user advertisement spaces with similar information. The advertiser can manually or automatically control which of these advertisement spaces he wants to advertise. This allows for precise targeting. However, it is to be understood that the user owning the advertisement space may review the advertisements proposed by the advertiser and may reject some of the proposed advertisements. Also, the online service may allow the advertiser to bypass a review of the user.

Furthermore, the advertiser can let the content provider, i.e., the owner of the advertisement space, to choose or select advertisements. In this case, preferably the advertiser may advertise his advertisements to the users defining advertisement spaces. The user may search all available advertisements uploaded by one or more advertisers with all respective parameters and data and may directly select suitable advertisements for display in his advertisement space(s).

In order to further improve the matching between advertisement spaces and advertisements, the online service may provide an auction system, where both sides, i.e., advertisers and users, may try to find their best match and negotiate about, for example, revenue shares. However, preferably, the targeting may not be part of the negotiable parameters. According to an example embodiment, the method 100 may comprise an auction of the user advertisement space. The users providing their advertisement spaces can auction their space off to the highest bidder, which may be an advertiser or another user of the online service. The auction procedure may use a general approach for the users, like setting a minimum revenue, timing or time range, such as data indicating a start and an end of availability of the advertisement space, an indication of a time when the auction ends, and others. The same auction may also be used by advertisers that can auction off their advertisements. An advertiser may set how much revenue he offers, a time frame, and other data. Furthermore, advertisement agencies can buy and resell advertisement spaces or advertisements to offer packages of advertisement spaces, as discussed above.

The system hosting the online service can analyze the effectiveness of the matching between the user advertisement space and selected advertisements in real time. If the effectiveness is low the system can, depending on settings, either automatically switch the current advertisement to another selected advertisement for that advertisement space, or inform the advertiser and the user that the performance of the advertisement placement is insufficient. Both sides may adjust or improve the parameters on their sides, such as the information associated with the advertisement space in step 104 of the method 100, or by updating the data related to the advertisements. The system may be configured to immediately process any changes and to affect the placement of advertisements in real time.

Typically, advertisement agencies may create revenue only by improving the matching. For example, a dedicated advertisement agency may optimize the matching between the user advertisement spaces and their advertisements, for example by analyzing available advertisements and available user advertisement spaces on the online service and by connecting them in a better way. The dedicated advertisement agency may earn a certain share of the revenue for providing this improvement service. The dedicated advertisement agency may be implemented as a processing module hosted by the system or may be implemented by a processing component connected to the system, for example, via a network, wherein the processing component may be provided at a site of a real advertisement agency.

As soon as a viewer, such as a user of the online service, interacts with an advertisement within a user advertisement space in any defined term and form, for example by clicking on it, the system hosting the online service may recognize the interaction and may count it as a successful interaction with the advertisement. The kind of interaction may be open and may only depend on specific implementation details and parameters, such as interaction per click, view, mouse contact, and others. Hence, an advertiser may pay per successful interaction. For example, the advertiser may buy a certain amount of clicks or other interactions. If these paid clicks or interactions are used, the advertisement is not displayed, unless the advertiser buys new clicks or interactions from the provider of the online service.

The revenue of an interaction may be shared between the provider of the online service and the user providing the advertisement space, preferably as a reward to the user, which may be defined in several ways: (1) real currency, the user providing the advertisement space receives a certain share of the payment, which the advertiser has paid for the advertisement placement; (2) virtual currency, the user receives a certain amount of virtual currency that has been bought for the advertisement placement by the advertiser from a provider of the virtual currency, which may be the provider of the online service or another entity of the online service; or (3) payment may also be done via services. In the latter case, the provider of the online service may transfer possible services to the user, such as (a) a premium account that normally would have to be paid for with other currency, or (b) achievements or parts of achievements that are implemented in the social network.

In steps 102, 104, and 106 of the method 100, a user can manage his advertisement space. Alternatively, the user may also manage advertisement spaces that have been rented from other users for the time of the rent. In particular, the user may further create, delete, and/or edit the aforementioned advertisement spaces, wherein editing an advertisement space may comprise changing settings of the advertisement space, like size, keywords, a schedule, and others.

If the user advertisement space is rented or already scheduled for a specific advertisement, changes may not take any effect until the current agreements between the advertiser and the user providing the advertisement space are not valid anymore. For example, a user can change the size of his advertisement space and shrink it, but a currently displayed advertisement will preferably not be affected by the change. The moment the advertisement campaign is over, the changes may take effect. However, it is to be understood that the system may as well be configured to immediately apply any changes made by the user. In this case, the advertiser may be informed about the changes and may react to the new situation.

The provider of the online service may define how many single advertisement spaces and how many advertisements a user may offer. For example, each user may offer five different user advertisement spaces for five different advertisements.

A user providing an advertisement space may view several data related to the advertisement space, like the amount of visitors, income earned, amount of successful clicks, and others. The system may collect and present this data in order to improve the matching by showing the user, for example, a time chart of how much he/she earned per week, day, or month, etc., or how many users visited his site per week, day, month, and other time periods. In addition, as will be discussed below, several options may be displayed in combination with the advertisements in the advertisement space, such as "manage advertisement space" to manage the related advertisement space, or "be ad-free" to enable a premium account status, wherein advertisements are inhibited. In particular, if a user does not want to have advertisements on his profile, the online service provider can, yet does not have to, offer the ability to disable advertisements, for example, in a "premium" account. For this option, the provider may demand a certain fee to be paid.

In particular, with regard to suitable, non-distracting advertisements presented in connection with the content, it is in the best interest of a user providing the user advertisement space to match the advertisements as best as possible to the actual visiting users viewing the content. Therefore, the user preferably may edit the information in steps 102 and 104 anytime in order to improve the advertisement targeting. Preferably, targeting may be further improved by enabling the viewers to report a mismatch to the user and/or the advertiser. Also, the advertiser may inspect the results, as discussed above, and may compare the desired target group for his advertisements with the real viewers. Preferably, each viewer may be registered as a user with the online service and may have a profile, which may be compared with the desired target group for the advertisements. As an alternative or in addition, the system hosting the online service may automatically track the single placements of an advertisement and compare their performances against each other. This information may again be accessible by the advertiser and the user owning the advertisement space. Furthermore, low performers can be informed in order to adjust their settings. Also, the user owning the advertisement space may compare the data mentioned above and change the settings to increase the performance of his user advertisement space.

Even though methods according to embodiments of the present disclosure have been described with reference to example embodiments, it is to be understood that particular processing steps may be modified, added, and/or omitted without leaving the scope of the present disclosure. Also, the processing steps may be performed in a different order from the examples described.

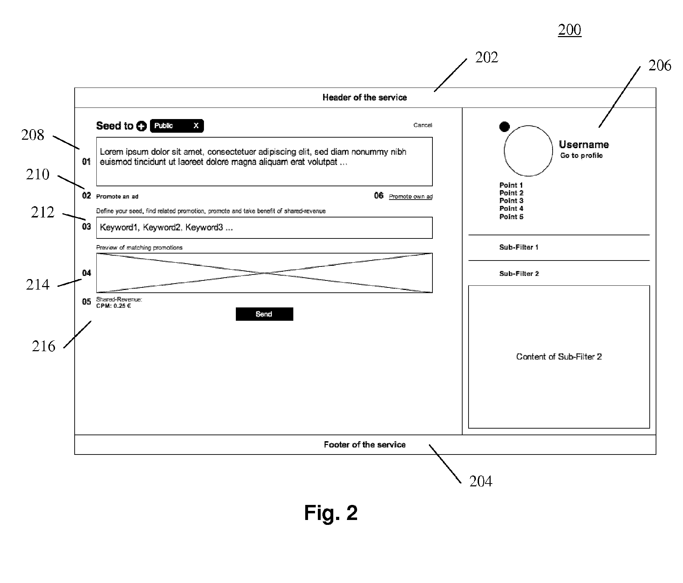

FIGURE 2 shows a schematic representation of an input interface of a server according to an embodiment of the present disclosure. The input interface 200 is presented as a page of a social network. The page may comprise a header 202 and footer 204 providing information related to a currently used service of the social network. Furthermore, the page may comprise information about the user, providing a username and other identification, such as an image of the user, and various further services of the user, such filters for content, in section 206. The user may, for example, upload content to the social network, which may be represented by a container or seed 208. Thereafter, the user may click on a link 210 enabling the user to describe his seed by keywords 212 and to find matching advertisements 214, which the user may embed to his posts within a user advertisement space and promote them actively.

In particular, after defining keywords 212, the social network may analyze the keywords 212 and match the information with data of available advertisements. Thereafter, the most matching advertisement may be displayed as advertisement 214. Also, the social network may pre-select a number of most matching advertisements and present them as matching advertisements 214 one after the other or at the same time. For each matching advertisement 214 the user is provided with information 216 about a shared revenue, he will get as a reward for actively promoting the matching advertisement 214 in his advertisement space. The user may select the matching advertisement 214 or may reject the proposal and request a further matching advertisement 214 to be shown in combination with the content 208 to potential viewers, as discussed below.

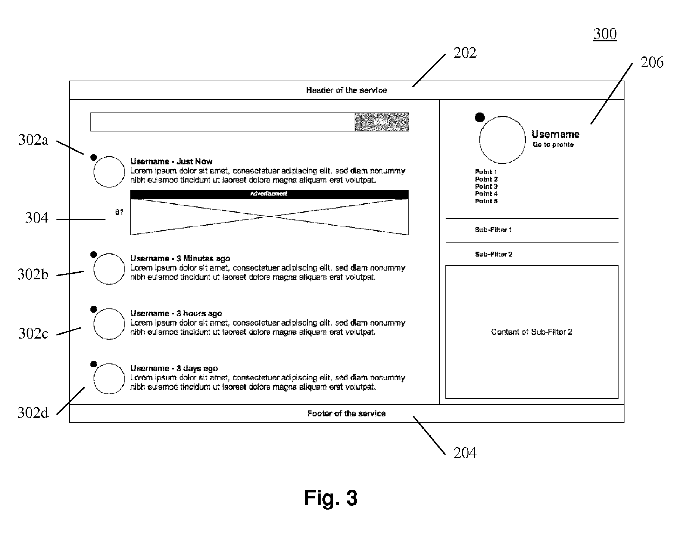

FIGURE 3 shows a schematic representation of an output interface of a server according to an embodiment of the present disclosure. Similar to the input interface 200 of FIGURE 2, the output interface 300 may be presented as a page of a social network. Therefore, the same or similar parts of FIGURE 3 have been designated with the same reference signs as in FIGURE 2. Furthermore, the output interface shows a plurality of content 302a, 302b, 302c, 302d, which may be represented by seeds, wherein content 302a, which may correspond to content 208 of FIGURE 2, is linked to an advertisement space 304 presenting matching advertisements. Preferably, an advertisement may be embedded to the content 302a. The advertisement space 304 may either present a single advertisement, or the respective user can promote multiple advertisements, so that the advertisement space 304 can be rotating.

Preferably, if the budget of an advertising campaign including the presented advertisement is used up, the advertisement will be removed from the advertisement space 304. Thereafter, the user may define that the advertisement space 304 is free of any advertisements and therefore will not be shown, or the user may embed further related advertisements.

Even though only one advertisement space 304 has been shown, it is to be understood that the present disclosure is not limited to one advertisement space only or to a particular number of advertisement spaces. Rather, for each content 302a, ..., 302d, one or more advertisement spaces may be presented whenever the content 302a, ..., 302d is perceived by another user of the social network.

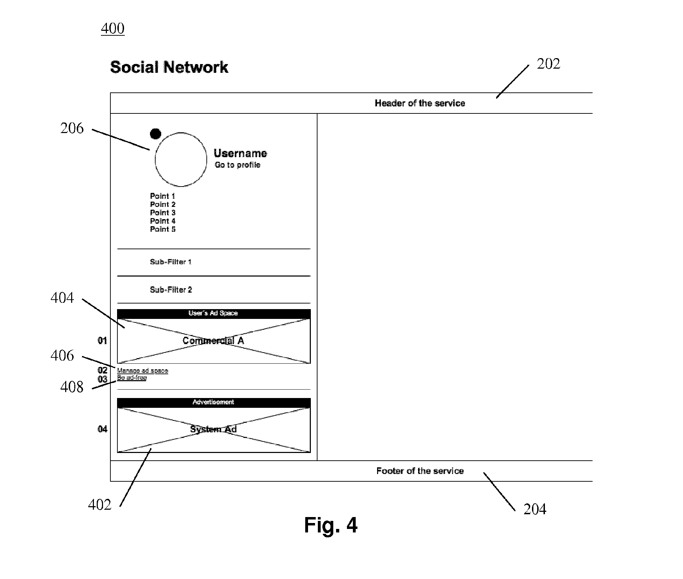

FIGURE 4 illustrates a presentation of an advertisement space related to a profile of a user of an online service, according to an embodiment of the present disclosure. Similar to the input interface 200 of FIGURE 2, the profile 400 may be presented as a page of a social network. Therefore, the same or similar parts of FIGURE 4 have been designated with the same reference signs as in FIGURE 2. The profile may comprise a header 202 and footer 204, as well as a section 206 characterizing the user. It is to be understood that further data of a user may be shown in the profile 400 and the present embodiment is not restricted to the header 202, the footer 204, and the section 206. In addition, the social network may place an advertisement 402 on the profile 400 of the user. This advertisement 402 typically cannot be controlled by the user and will therefore most likely not match the interests of visitors of the profile 400 of the user.

Since content according to an embodiment of the present disclosure refers to data, services, as well as users and groups of users, which may be represented by a seed, the user may also specify information related to himself and associate the information with an advertisement space 404. After matching the information with data related to available advertisements, the user may select suitable advertisements which are to be displayed whenever a visitor views the profile 400 of the user. Thus, the advertisements shown within the advertisement space 404 are user-driven, such as controlled and influenced by the user and in context, advertisement 402 will most likely match the interests of the visitors of profile 400.

Furthermore, the social network may recognize if the user visits his profile 400. In this case, the social network may present the user further interaction possibilities, such as link 406 which enables the user to manage the related advertisement space 404, and link 408 which enables the user to turn off any further advertisements, such as advertisement 402, for example, by requesting a premium account.

In an example use case, an advertiser may buy a campaign, wherein advertisements of the campaign may be placed in advertisement spaces of users according to embodiments of the present disclosure. For example, an advertiser A offers a campaign for 10,000 contacts, paying 10,000 currency units (abbreviated with coins), one coin per contact. The advertisement is targeted towards gamers of a new game that is planned to launch in one month. On the first day of the offer, 17 users connect the uploaded advertisement to an advertisement space of their profile and generate on their profiles altogether 1,514 contacts. The connected users offer themselves content that features certain aspects of the upcoming game, like videos, blogs, interviews, etc. Over the next days, more users connect the advertisement to advertisement spaces of their respective profiles, so that 78 instances of the advertisement are available in different user profiles. As the hype of the game goes up, the 10,000 offered coins are spent after only 25 days. Now the advertiser has the option to extend the advertisement by offering more coins, or end the campaign as planned.

Furthermore, another embodiment of the present disclosure may be used in a second example use case enabling cross promoting of user content. Two users, user 1 and user 2, share the same interest of American muscle cars of the 1970s. Both users offer their self-made photographs of such cars on their profiles. They agree to place an advertisement for the other user in an advertisement space on their profile to offer any visitors a better experience. In particular, the visitors do not have to search for other related profiles offering similar content on their own. As the page of user 1 is visited more often, user 1 earns more coins and user 2 has to pay user 1 an advertisement space fee that is agreed upon at the beginning. Now user 2 tries to improve his page to attract more users to his page to re-earn the coins back again from user 1.

The aforementioned use cases may preferably be executed with embodiments of the present disclosure. Also, embodiments of the disclosure may comprise any features specified with regard to the use cases. However, it is to be understood that the present disclosure is not restricted to the presented use cases.

Also, it is to be understood that many modifications may be provided to the example embodiments of the disclosure without leaving the scope of the disclosure. In particular, the disclosure may be practiced within the scope of the claims differently from the examples described and the described features and characteristics may be of importance for the disclosure in any combination.

## Claims

1. A server for providing advertisements to users of an online service hosted by the server, including:
an input interface configured to enable a user of the online service to specify information related to content of the user provided via the online service to other users of the online service;
means for associating at least some of the information with an advertisement space related to the content;
a processing component of the online service configured to provide advertisements based on the information associated with the advertisement space;
means for selecting at least some of the provided advertisements for display in the advertisement space; and
an output interface configured to display the selected advertisements in the advertisement space to one or more of the other users viewing at least some of the related content.

2. The server of claim 1, wherein the processing component comprises a matching module configured to match the information with data of advertisements available on the online service and provide a number of the available advertisements having a largest matching score.

3. The server of claim 1 or 2, further including means for associating a weighting factor to at least some of the information, wherein said advertisements are provided based on the information weighted by a respective weighting factor, and means for assigning to the user a reward, responsive to at least one of the other users interacting with an advertisement displayed in the advertisement space of the user.

4. The server according to one of the preceding claims, wherein the online service is a social network.

5. An online service hosted by a server according to one of the preceding claims, wherein said online service is configured to provide advertisements to users of the online service, wherein a plurality of users is connected to the online service and, for each user, at least one advertisement space is provided by the server.

6. The online service of claim 5, wherein the processing component of the server is further configured to combine at least some of the advertisement spaces of at least some of the users into a package based on the information associated with each respective advertisement space, and to provide the same advertisements for the advertisement spaces of the package.

7. A method for providing advertisements to users of an online service, including:
receiving, from a user of the online service, information related to content of the user provided via the online service to other users of the online service;
associating at least some of the information with an advertisement space related to the content;
providing, by the online service, advertisements based on the information associated with the advertisement space;
selecting at least some of the provided advertisements for display in the advertisement space; and
displaying the selected advertisements in the advertisement space to one or more of the other users viewing at least some of the related content.

8. The method of claim 7, wherein said providing advertisements includes matching the information with data of advertisements available on the online service and providing a number of the available advertisements having a largest matching score.

9. The method of claim 7 or 8, further including at least one of associating a weighting factor to at least some of the information, wherein said advertisements are provided based on the information weighted by a respective weighting factor, and presenting a preview of the provided advertisements to the user directly after associating the information with the advertisement space.

10. The method according to one of the claims 7 to 9, further including receiving user changes of settings of the advertisement space, including changes of at least one of the information and the content associated with the advertisement space, and receiving user changes of parameters of the advertisement space, including a size and a position of the advertisement space, and a schedule of the selected advertisements.

11. The method according to one of the claims 7 to 10, wherein the content comprises the profile of the user and wherein the advertisement space is displayed whenever another user views the profile of the user.

12. The method according to one of the claims 7 to 11, further including associating at least some of the information with at least one further advertisement space related to the content and displaying the at least one further advertisement space comprising selected advertisements to one or more of the other users viewing the related content, wherein the information of the advertisement space is initially assigned to each one of the at least one further advertisement space, and further including choosing, by the online service, at least one of the advertisement spaces for display to one of the other users based on the content requested by the other user.

13. The method according to one of the claims 7 to 12, further including assigning to the user a reward in response to at least one of the other users interacting with an advertisement displayed in the advertisement space of the user.

14. The method according to one of the claims 7 to 13, wherein a plurality of users is connected to the online service and for each user at least one advertisement space is provided, wherein at least some of the advertisement spaces of at least some of the users are combined to a package based on the information associated with each respective advertisement space, wherein the same advertisements are provided by the online system for the advertisement spaces of the package, preferably further including renting to a first user of the plurality of users an advertisement space of a second user of the plurality of users.

15. A computer-readable medium having instructions stored thereon, wherein said instructions, in response to execution by a computing device, cause said computing device to automatically perform a method for providing advertisements to users of an online service according to one of the claims 7 to 14.
